# EUROPEAN PATENT APPLICATION

(11) **EP 4 711 020 A1**
(43) Date of publication of application: **18.03.2026**
(21) Application number: 24822224.2
(22) Date of filing: 30.01.2024
(51) Int. Cl.: A63F 13/42

(54) **CLOUD GAME PROCESSING METHOD, SERVER, AND SYSTEM**

(30) Priority: 12.06.2023 CN 202310717788; 25.08.2023 CN 202311082807
(71) Applicant: Huawei Cloud Computing Technologies Co., Ltd., Guiyang, Guizhou, 550025 (CN)
(72) Inventor: HU, Bin, Shenzhen, Guangdong 518129 (CN)
(74) Representative: Gill Jennings & Every LLP
(86) International application number: PCT/CN2024/074567
(87) International publication number: WO 2024/255263

(57) **Abstract**

A cloud game processing method is provided. A cloud game server includes a rendering module and a video stream processing module. The method includes: The rendering module performs rendering on a background in a cloud game scene to obtain a video stream of a background image of a cloud game; the video stream processing module crops an image in the video stream of the background image of the cloud game to obtain a target video stream of the cloud game, where a size of a game background image in the target video stream matches a field of view of a game character corresponding to a terminal device; and after performing compression and encoding processing on the target video stream, the video stream processing module sends the processed target video stream to the terminal device, where the terminal device is configured to locally generate the game character and/or an item of the game character, and superimpose the game character and/or the item of the game character on the background image in the processed target video stream, to present, to a user, the game scene of the cloud game from a perspective of the game character.

## Description

### TECHNICAL FIELD

This application relates to the field of cloud technologies, and in particular, to a cloud game processing method, server, and system.

### BACKGROUND

With the continuous development of cloud technologies, cloud games have become a hot topic in the information industry in recent years. The cloud games are games based on cloud computing. In a cloud game running mode, all games are run on a cloud server end, and rendered game images are compressed and transmitted to terminal devices of users through a network. The terminal devices of the users do not need any high-end processor or graphics card, but only need basic video decompression capabilities. Therefore, the cloud games have many features, such as "cloud-based running, high image quality, and tapping to play". With the advent of the 5G era, breakthroughs in a bandwidth issue of real-time cloud rendering bring greater imagination to the cloud games. However, an inevitable problem of the cloud games is latencies. Therefore, how to resolve running freezing of the cloud games on the terminal devices of the users caused by network latencies and improve game experience of the users becomes an urgent problem to be resolved currently.

### SUMMARY

This application provides a processing method, server, and cloud game system, to resolve running freezing on a terminal device of a user caused by a network latency, and improve game experience of the user.

According to a first aspect, this application provides a cloud game processing method, where the method is applied to a cloud game server. The cloud game server includes a rendering module and a video stream processing module. A user can control, on a terminal device, a game character in a cloud game. The method includes: The rendering module performs rendering on a background in a cloud game scene to obtain a video stream of a background image of the cloud game; the video stream processing module crops an image in the video stream of the background image of the cloud game to obtain a target video stream of the cloud game, where a size of a game background image in the target video stream matches a field of view of the game character corresponding to the terminal device; and after performing compression and encoding processing on the target video stream, the video stream processing module sends the processed target video stream to the terminal device, where the terminal device is configured to locally generate the game character and/or an item of the game character, and superimpose the game character and/or the item of the game character on the background image in the processed target video stream, to present, to the user, the game scene of the cloud game from a perspective of the game character.

According to the foregoing method, the cloud game server and the terminal device separately perform rendering on content in the cloud game scene, and then the terminal performs superimposition and display. In a device-cloud collaboration manner, the terminal device shares rendering tasks in the cloud game scene, to avoid a network latency problem caused by an insufficient network bandwidth, where the insufficient network bandwidth results from an excessively large target video stream of the cloud game caused because the rendering tasks in the cloud game scene are all completed by the cloud server. In addition, the background image of the cloud game is pre-cropped based on an image display range of the terminal device, and a cropped game image is transmitted to the terminal, to further reduce a data transmission amount and therefore mitigate the network latency problem caused by the insufficient network bandwidth.

In a possible implementation of the first aspect, the size of the game background image in the target video stream includes the field of view of the game character corresponding to the terminal device and a buffer range outside the field of view, and a size of the buffer range is determined based on a network latency of receiving the processed target video stream by the terminal device.

According to the foregoing method, the game background image in the target video stream that is sent by the cloud game server to the terminal device includes the buffer range. The buffer range is for resolving, by using a phenomenon of persistence of vision of human eyes on a game image on the terminal device, a freezing problem to the user caused by the network latency of receiving the processed target video stream by the terminal device.

In a possible implementation of the first aspect, a value of the buffer range is obtained by multiplying a value of a maximum moving speed at which the user controls the cloud game by a value of the network latency of the processed target video stream.

According to the foregoing method, the buffer range is obtained based on two parameters: the maximum moving speed at which the user controls the cloud game and the network latency of the target video stream. Based on the foregoing parameters, calculation of the buffer range can be more accurate.

In a possible implementation of the first aspect, the cloud game server further includes a sending module. The method further includes: The sending module sends coordinate information of the game character that is in the cloud game and that can be controlled by the user on the terminal device and spatial depth information of the cloud game to the terminal device, where the terminal device is configured to perform display based on a spatial projection relationship by superimposing the background image in the processed target video stream on the spatial depth information of the cloud game, and the terminal device is further configured to control the game character in the cloud game based on the coordinate information of the game character that is in the cloud game and that can be controlled by the user on the terminal device.

According to the foregoing method, the terminal device performs display based on the spatial projection relationship by superimposing the background image in the processed target video stream on the spatial depth information of the cloud game, so that the game character and the item and the background image in the cloud game scene that are separately processed by the terminal device and the cloud game server more accurately match. In addition, a processing manner of using the spatial depth information makes an image in the cloud game scene more realistic.

In a possible implementation of the first aspect, that the rendering module performs rendering on the background in the cloud game scene to obtain the video stream of the background image of the cloud game includes: identifying a perspective type in the cloud game scene, and when the perspective type is a first-person perspective, performing rendering on the background in the cloud game scene by using a virtual reality VR technology, to obtain the video stream of the background image of the cloud game.

According to the foregoing method, when it is identified that the perspective type of the cloud game is the first-person perspective, the virtual reality VR technology is used to perform rendering on the background in the cloud game scene, so that the rendered image better meets a requirement of playing the game from the first-person perspective, and a rendering effect better meets an actual experience requirement of the user for playing the game from the first-person perspective.

In a possible implementation of the first aspect, that the rendering module performs rendering on the background in the cloud game scene to obtain the video stream of the background image of the cloud game includes: identifying a perspective type in the cloud game scene, and when the perspective type is a third-person perspective, performing rendering on the background in the cloud game scene by using a planar graphics rendering technology, to obtain the video stream of the background image of the cloud game.

According to the foregoing method, when it is identified that the perspective type of the cloud game is the third-person perspective, the planar graphics rendering technology is used to perform rendering on the background in the cloud game scene, so that the rendered image better meets a requirement of playing the game from the third-person perspective, and a rendering effect better meets an actual experience requirement of the user for playing the game from the third-person perspective.

According to a second aspect, this application further provides a cloud game processing method, where the method is applied to a cloud game system. A user can control, on a terminal device, a game character in a cloud game. The method includes: A cloud game server performs rendering on a background in a cloud game scene to obtain a video stream of a background image of the cloud game; the cloud game server crops an image in the video stream of the background image of the cloud game to obtain a target video stream of the cloud game, where a size of a game background image in the target video stream matches a field of view of the game character corresponding to the terminal device; after performing compression and encoding processing on the target video stream, the cloud game server sends the processed target video stream to the terminal device; and the terminal device locally generates the game character and/or an item of the game character, and superimposes the game character and/or the item of the game character on the background image in the processed target video stream, to present, to the user, the game scene of the cloud game from a perspective of the game character.

According to the foregoing method, the cloud game server and the terminal device separately perform rendering on content in the cloud game scene, and then the terminal performs superimposition and display. In a device-cloud collaboration manner, the terminal device shares rendering tasks in the cloud game scene, to avoid a network latency problem caused by an insufficient network bandwidth, where the insufficient network bandwidth results from an excessively large target video stream of the cloud game caused because the rendering tasks in the cloud game scene are all completed by the cloud server.

In a possible implementation of the second aspect, the size of the game background image in the target video stream includes the field of view of the game character corresponding to the terminal device and a buffer range outside the field of view, and a size of the buffer range is determined based on a network latency of receiving the processed target video stream by the terminal device.

According to the foregoing method, the game background image in the target video stream that is sent by the cloud game server to the terminal device includes the buffer range. The buffer range is for resolving, by using a phenomenon of persistence of vision of human eyes on a game image on the terminal device, a freezing problem to the user caused by the network latency of receiving the processed target video stream by the terminal device.

In a possible implementation of the second aspect, a value of the buffer range is obtained by multiplying a value of a maximum moving speed at which the user controls the cloud game by a value of the network latency of the processed target video stream.

According to the foregoing method, the buffer range is obtained based on two parameters: the maximum moving speed at which the user controls the cloud game and the network latency of the target video stream. Based on the foregoing parameters, calculation of the buffer range can be more accurate.

In a possible implementation of the second aspect, the method further includes: The cloud game server sends coordinate information of the game character that is in the cloud game and that can be controlled by the user on the terminal device and spatial depth information of the cloud game to the terminal device, where the terminal device is configured to perform display based on a spatial projection relationship by superimposing the background image in the processed target video stream on the spatial depth information of the cloud game, and the terminal device is further configured to control the game character in the cloud game based on the coordinate information of the game character that is in the cloud game and that can be controlled by the user on the terminal device.

According to the foregoing method, the terminal device performs display based on the spatial projection relationship by superimposing the background image in the processed target video stream on the spatial depth information of the cloud game, so that the game character and the item and the background image in the cloud game scene that are separately processed by the terminal device and the cloud game server more accurately match. In addition, a processing manner of using the spatial depth information makes an image in the cloud game scene more realistic.

In a possible implementation of the second aspect, that the cloud game server performs rendering on the background in the cloud game scene to obtain the video stream of the background image of the cloud game includes: identifying a perspective type in the cloud game scene, and when the perspective type is a first-person perspective, performing rendering on the background in the cloud game scene by using a virtual reality VR technology, to obtain the video stream of the background image of the cloud game.

According to the foregoing method, when it is identified that the perspective type of the cloud game is the first-person perspective, the virtual reality VR technology is used to perform rendering on the background in the cloud game scene, so that the rendered image better meets a requirement of playing the game from the first-person perspective, and a rendering effect better meets an actual experience requirement of the user for playing the game from the first-person perspective.

In a possible implementation of the second aspect, that the terminal device locally generates the game character and/or the item of the game character includes: The terminal device locally constructs a virtual reality VR rendering sphere, and performs rendering on the game character and/or the item of the game character inside the rendering sphere.

According to the foregoing method, the terminal device uses a same type of virtual reality VR rendering technology as the cloud game server, so that the background image in the cloud game scene and the game character and the game item that are superimposed and displayed better match, thereby bringing better game visual experience to the user.

In a possible implementation of the second aspect, that the cloud game server performs rendering on the background in the cloud game scene to obtain the video stream of the background image of the cloud game includes: identifying a perspective type in the cloud game scene, and when the perspective type is a third-person perspective, performing rendering on the background in the cloud game scene by using a planar graphics rendering technology, to obtain the video stream of the background image of the cloud game.

According to the foregoing method, when it is identified that the perspective type of the cloud game is the third-person perspective, the planar graphics rendering technology is used to perform rendering on the background in the cloud game scene, so that the rendered image better meets a requirement of playing the game from the third-person perspective, and a rendering effect better meets an actual experience requirement of the user for playing the game from the third-person perspective.

In a possible implementation of the second aspect, that the terminal device locally generates the game character and/or the item of the game character includes: The terminal device locally constructs a rendering plane, and performs rendering on the game character and/or the item of the game character in the rendering plane.

According to the foregoing method, the terminal device uses a same type of planar graphics rendering technology as the cloud game server, so that the background image in the cloud game scene and the game character and the game item that are superimposed and displayed better match, thereby bringing better game visual experience to the user.

In a possible implementation of the second aspect, the method further includes: The terminal device receives an operation instruction of the user for moving leftward, and moves the background image in the game scene of the cloud game from the perspective of the game character leftward; and the terminal device receives an operation instruction of the user for moving rightward, and moves the background image in the game scene of the cloud game from the perspective of the game character rightward.

According to the foregoing method, the terminal device responds to the operation instruction of the user based on the locally generated game character and the background image rendered by the cloud game server, so that the user has smoother game experience.

In a possible implementation of the second aspect, the method further includes: The terminal device receives an operation instruction of the user for moving forward, and zooms in the background image in the game scene of the cloud game from the perspective of the game character; and the terminal device receives an operation instruction of the user for moving backward, and zooms out the background image in the game scene of the cloud game from the perspective of the game character.

According to the foregoing method, the terminal device responds to the operation instruction of the user based on the locally generated game character and the background image rendered by the cloud game server. Freezing game experience of the user caused by a network latency can be alleviated by zooming in or out the image.

According to a third aspect, this application further provides a cloud game server, where the cloud game server includes: a rendering module, configured to perform rendering on a background in a cloud game scene to obtain a video stream of a background image of a cloud game; and a video stream processing module, configured to crop an image in the video stream of the background image of the cloud game to obtain a target video stream of the cloud game, where a size of a game background image in the target video stream matches a field of view of a game character corresponding to a terminal device, where the video stream processing module is further configured to: after performing compression and encoding processing on the target video stream, send the processed target video stream to the terminal device, where the terminal device is configured to locally generate the game character and/or an item of the game character, and superimpose the game character and/or the item of the game character on the background image in the processed target video stream, to present, to a user, the game scene of the cloud game from a perspective of the game character.

The third aspect or any implementation of the third aspect is step implementation of an apparatus corresponding to the first aspect or any implementation of the first aspect. Descriptions in the third aspect or any implementation of the third aspect are applicable to the first aspect or any implementation of the first aspect. Details are not described herein again.

According to a fourth aspect, this application further provides a cloud game system, where the cloud game system includes: a cloud game server, configured to perform rendering on a background in a cloud game scene to obtain a video stream of a background image of a cloud game, where the cloud game server is further configured to crop an image in the video stream of the background image of the cloud game to obtain a target video stream of the cloud game, where a size of a game background image in the target video stream matches a field of view of a game character corresponding to a terminal device; and the cloud game server is further configured to: after performing compression and encoding processing on the target video stream, send the processed target video stream to the terminal device; and the terminal device, configured to locally generate the game character and/or an item of the game character, and superimpose the game character and/or the item of the game character on the background image in the processed target video stream, to present, to a user, the game scene of the cloud game from a perspective of the game character.

The fourth aspect or any implementation of the fourth aspect is step implementation of an apparatus corresponding to the second aspect or any implementation of the second aspect. Descriptions in the fourth aspect or any implementation of the fourth aspect are applicable to the second aspect or any implementation of the second aspect. Details are not described herein again.

According to a fifth aspect, this application provides a computing device cluster, including at least one computing device, where each computing device includes a processor and a memory. The processor of the at least one computing device is configured to execute instructions stored in the memory of the at least one computing device, to enable the computing device cluster to perform the method disclosed in the first aspect or any possible implementation of the first aspect.

According to a sixth aspect, this application provides a computer program product including instructions. When the instructions are run by a computer device cluster, the computer device cluster is enabled to implement the method disclosed in the first aspect or any possible implementation of the first aspect.

According to a seventh aspect, this application provides a computer-readable storage medium, including computer program instructions. When the computer program instructions are executed by a computing device cluster, the computing device cluster is enabled to perform the method disclosed in the first aspect or any possible implementation of the first aspect.

### BRIEF DESCRIPTION OF DRAWINGS

FIG. 1 is a diagram of an AR game interface in a conventional technology;
FIG. 2 is a diagram of a cloud game interface according to an embodiment of the present invention;
FIG. 3 is a diagram of a cloud game system architecture based on a cloud game processing method according to an embodiment of the present invention;
FIG. 4 is a flowchart of a cloud game processing method according to an embodiment of the present invention;
FIG. 5 is a diagram of a cloud game scene from a first-person perspective according to an embodiment of the present invention;
FIG. 6 is a diagram of a cloud game scene from a third-person perspective according to an embodiment of the present invention;
FIG. 7 is a diagram of a buffer range on a cloud game interface according to an embodiment of the present invention;
FIG. 8 is a diagram of another buffer range on a cloud game interface according to an embodiment of the present invention;
FIG. 9 is a diagram of a structure of a computing device for a cloud game processing method according to an embodiment of the present invention; and
FIG. 10 is a diagram of a structure of a computing device cluster for a cloud game processing method according to an embodiment of the present invention.

### DESCRIPTION OF EMBODIMENTS

The following describes the technical solutions in embodiments of the present invention with reference to the accompanying drawings in embodiments of the present invention. It is clear that the described embodiments are merely some but not all of embodiments of the present invention. All other embodiments obtained by persons of ordinary skill in the art based on embodiments of the present invention without creative efforts shall fall within the protection scope of the present invention.

For ease of understanding of embodiments of this application, some terms in the present invention are first explained and described.

Cloud gaming: also referred to as on demand gaming, is an online gaming technology based on cloud computing technologies. Cloud gaming technologies allows lightweight devices with limited graphics processing and data computing capabilities to run high-quality games. In a cloud game scenario, games are not run on game terminals of players, but are run on cloud servers. The cloud servers render game scenes into video and audio streams and transmits the video and audio streams to the game terminals of the players through a network. The game terminals of the players do not need to have powerful graphics computing and data processing capabilities, but only need to have basic streaming media play capabilities and capabilities of obtaining instructions input by the player and sending the instructions to the cloud server.

A virtual reality (Virtual Reality, VR) technology means a combination of virtuality and reality. Theoretically, the virtual reality (VR) technology is a computer simulation system that allows creation and experience of a virtual world, and uses computers to generate a simulation environment, so that users can be immersed in the environment. The virtual reality technology is to generate electronic signals by using data from real life and computer technologies, and combine the electronic signals with various output devices to transform the electronic signals into phenomena that can be perceived by people. These phenomena may be tangible objects in real life or substances that are invisible to naked eyes, and these phenomena are represented by using three-dimensional models. Because these phenomena are not directly visible to us, but are simulations of the real world that are created by using computer technologies. Therefore, these phenomena are referred to as virtual reality.

Augmented reality (augmented reality, AR) is a technology for ingeniously combining virtual information with a real environment, where the virtual information such as texts, images, three-dimensional models, music, and videos generated by computers are simulated and then applied to the real environment. The virtual information and information in the real environment complement each other, to implement "augmentation" of the real environment.

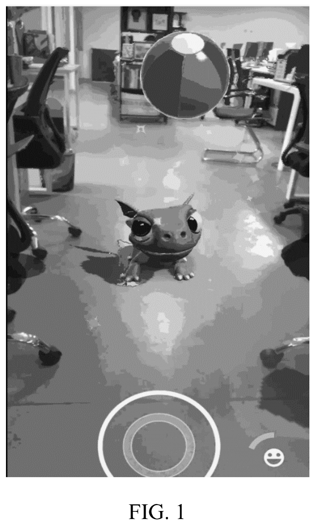

FIG. 1 is a diagram of an AR game interface in a conventional technology. In an existing AR game, a virtual game character and/or a game item required for the game are generated on a terminal device. By using a camera apparatus on the terminal device, the AR game interface is presented in a manner of using an object in the real world as a background image of the game and combining the real world with the virtual game character and/or the game item. For the game interface in this manner, a combination of virtuality and reality is used. The background image of the game is only the real world, and clarity of the background image depends on the camera apparatus on the terminal device. The background image is visually monotonous, and a display effect is not exquisite enough.

With the continuous development of cloud technologies, cloud games meet requirements of games on hardware performance of a terminal device of a user based on powerful data processing capabilities of cloud resources. After the games are migrated to a cloud, and game images are rendered on a cloud server end, and then video streams of the cloud games may be transmitted to the terminal device of the user through a network. However, a manner of transmission over a network is affected by quality of a network bandwidth, and that the game is processed only on the cloud server end causes a network latency, which affects game experience.

In view of the foregoing problems existing in the foregoing technologies, in this application, the background image in the cloud game scene is rendered on the cloud server end, and the virtual game character and/or the game item in the cloud game are generated by the terminal device, to resolve a problem that the video stream of the cloud game is excessively large and consequently is prone to be affected by the network latency, where the excessively large video stream is caused because both the background image in the cloud game and the virtual game character and/or the game item in the cloud game are processed on the cloud server end. In addition, a problem that the background image is visually monotonous and is not exquisite enough in the existing AR game is avoided.

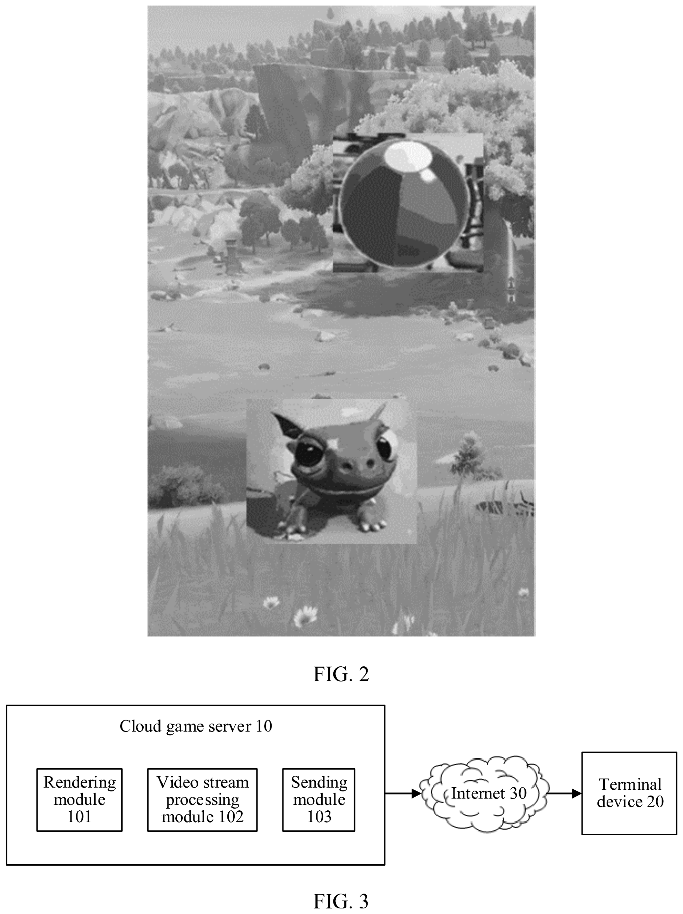

FIG. 2 is a diagram of a cloud game interface according to an embodiment of the present invention. The present invention provides a cloud game processing method, where the method is applied to a cloud game system. A user can control, on a terminal device, a game character in a cloud game. The method includes: A cloud game server performs rendering on a background in a cloud game scene to obtain a video stream of a background image of the cloud game; the cloud game server crops an image in the video stream of the background image of the cloud game to obtain a target video stream of the cloud game, where a size of a game background image in the target video stream matches a field of view of the game character corresponding to the terminal device; after performing compression and encoding processing on the target video stream, the cloud game server sends the processed target video stream to the terminal device; and the terminal device locally generates the game character and/or an item of the game character, and superimposes the game character and/or the item of the game character on the background image in the processed target video stream, to present, to the user, the game scene of the cloud game from a perspective of the game character. In FIG. 2, rendering on the background on the cloud game interface is performed and completed by the cloud game server on a cloud, and the game character and/or the item of the game character in the cloud game are/is locally generated by the terminal device, and finally a game effect after superimposition is presented.

According to the foregoing method, the cloud game server and the terminal device separately perform rendering on content in the cloud game scene, and then the terminal performs display through superimposition. In a device-cloud collaboration manner, the terminal device shares rendering tasks in the cloud game scene, to avoid a network latency problem caused by an insufficient network bandwidth, where the insufficient network bandwidth results from an excessively large target video stream of the cloud game caused because the rendering tasks in the cloud game scene are all completed by the cloud server.

Embodiments of the present invention further disclose a cloud game system architecture for implementing the cloud game processing method in FIG. 2. For details, refer to the following descriptions.

FIG. 3 is a diagram of a cloud game system architecture based on a cloud game processing method according to an embodiment of the present invention. In the embodiment shown in FIG. 3, a cloud game system includes a cloud game server 10 and a terminal device 20. The cloud game server 10 and the terminal device 20 perform data transmission through an internet 30. The cloud game server 10 includes a rendering module 101, a video stream processing module 102, and a sending module 103. The rendering module 101 is configured to perform rendering on a background in a cloud game scene to obtain a video stream of a background image of a cloud game. The video stream processing module 102 is configured to crop an image in the video stream of the background image of the cloud game to obtain a target video stream of the cloud game, where a size of a game background image in the target video stream matches a field of view of a game character corresponding to the terminal device. The video stream processing module 102 is further configured to, after performing compression and encoding processing on the target video stream, send the processed target video stream to the terminal device 20. The terminal device 20 is configured to locally generate the game character and/or an item of the game character, and superimpose the game character and/or the item of the game character on the background image in the processed target video stream, to present, to a user, the game scene of the cloud game from a perspective of the game character.

It should be noted that the rendering module 101, the video stream processing module 102, and the sending module 103 may all be implemented by using software, or may be implemented by using hardware. For example, the following uses the rendering module 101 as an example to describe an implementation of the rendering module 101. Similarly, for implementations of the video stream processing module 102 and the sending module 103, refer to the implementation of the rendering module 101.

When implemented by using software, the rendering module 101 may be an application program or a code block run on a computer device. The computer device may be at least one of computing devices such as a physical host, a virtual machine, and a container. Further, there may be one or more computer devices. For example, the rendering module 101 may be an application program run on a plurality of hosts/virtual machines/containers. It should be noted that the plurality of hosts/virtual machines/containers configured to run the application program may be distributed in a same availability zone (availability zone, AZ), or may be distributed in different AZs. The plurality of hosts/virtual machines/containers configured to run the application program may be distributed in a same region (region), or may be distributed in different regions. Generally, one region may include a plurality of AZs.

Similarly, the plurality of hosts/virtual machines/containers configured to run the application program may be distributed in a same virtual private cloud (virtual private cloud, VPC), or may be distributed in a plurality of VPCs. Generally, one region may include a plurality of VPCs, and one VPC may include a plurality of AZs.

When implemented by using hardware, the rendering module 101 may include at least one computing device, for example, a server. Alternatively, the rendering module 101 may be a device implemented by using an application-specific integrated circuit (application-specific integrated circuit, ASIC) or a programmable logic device (programmable logic device, PLD), or the like. The PLD may be implemented by using a complex programmable logic device (complex programmable logic device, CPLD), a field-programmable gate array (field-programmable gate array, FPGA), a generic array logic (generic array logic, GAL), or any combination thereof.

A plurality of computing devices included in the rendering module 101 may be distributed in a same AZ, or may be distributed in different AZs. A plurality of computing devices included in the rendering module 101 may be distributed in a same region, or may be distributed in different regions. Similarly, a plurality of computing devices included in the rendering module 101 may be distributed in a same VPC, or may be distributed in the plurality of VPCs. The plurality of computing devices may be any combination of computing devices such as the server, the ASIC, the PLD, the CPLD, the FPGA, and the GAL.

It should be noted that any one of the rendering module 101, the video stream processing module 102, and the sending module 103 may be configured to perform some or all steps in the cloud game processing method.

The modules of the cloud game server 10 disclosed in embodiments of the present invention have clear division of labor and close cooperation, and the modules cooperate with each other to efficiently complete a service of performance optimization for a cloud service.

Based on the foregoing cloud game system architecture, embodiments of the present invention further disclose detailed steps of the cloud game processing method. For details, refer to the following descriptions.

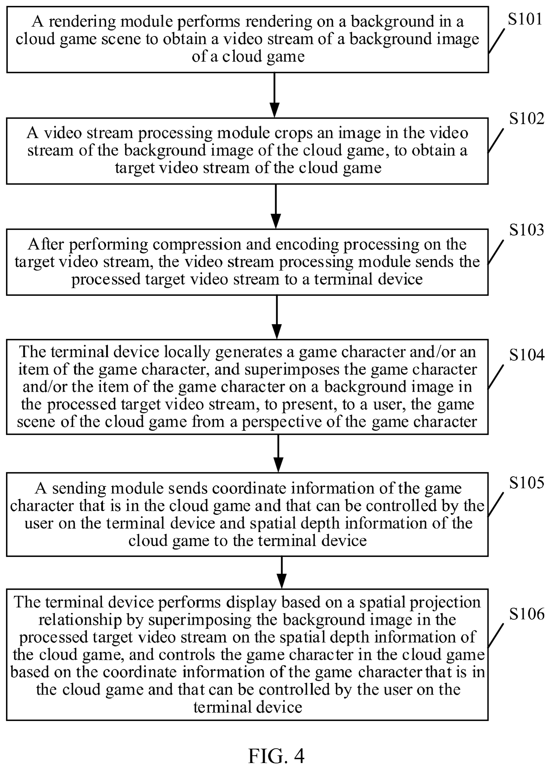

FIG. 4 is a flowchart of a cloud game processing method according to an embodiment of the present invention. The method includes the following steps.

S101: A rendering module performs rendering on a background in a cloud game scene to obtain a video stream of a background image of a cloud game.

After receiving a cloud game starting instruction sent by a terminal device of a user, a cloud game server finds, in a cloud game library, the 3D scene that matches the target cloud game of the user and that is required for starting the cloud game. The rendering module in the cloud game server extracts a panorama of the background in the 3D scene, performs rendering on the panorama, and then adds corresponding audio, to form the video stream of the background image of the cloud game.

Specifically, before performing rendering on the background in the cloud game scene, the rendering module needs to identify a perspective type in the cloud game scene. When the perspective type is a first-person perspective, rendering is performed on the background in the cloud game scene by using a virtual reality VR technology, to obtain the video stream of the background image of the cloud game. When the perspective type is a third-person perspective, rendering is performed on the background in the cloud game scene by using a planar graphics rendering technology, to obtain the video stream of the background image of the cloud game.

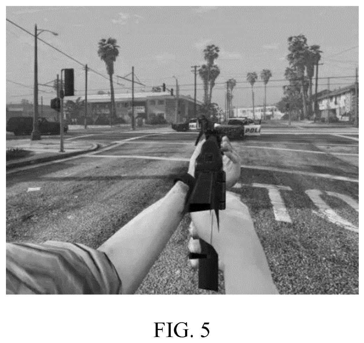

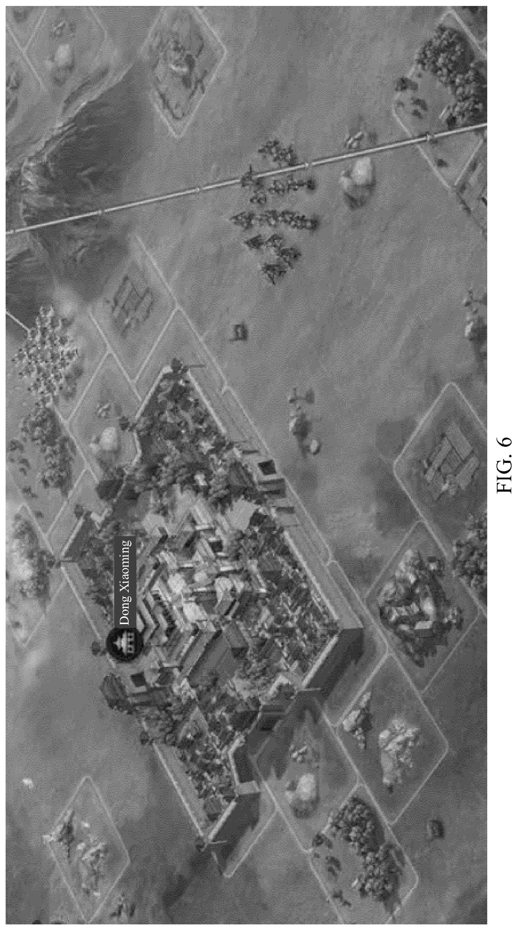

FIG. 5 is a diagram of a cloud game scene from a first-person perspective according to an embodiment of the present invention, and FIG. 6 is a diagram of a cloud game scene from a third-person perspective according to an embodiment of the present invention. A focus of rendering of a game background image varies with a game perspective. First-person respective rendering focuses more on immersive visual experience, and third-person perspective rendering focuses more on an overall visual presentation of the game. Therefore, using different rendering manners for different perspective types of the cloud game makes a rendering effect of the background in the cloud game scene better meet an actual experience requirement of the user for playing the game.

S102: A video stream processing module crops an image in the video stream of the background image of the cloud game, to obtain a target video stream of the cloud game.

The video stream processing module in the cloud game server crops the image in the video stream that is of the background image of the cloud game and that is obtained through rendering, so that a size of an image in the video stream of the background image of the cloud game meets a requirement of the terminal device of the user.

It should be noted that a size of a game background image in the target video stream includes a field of view of a game character corresponding to the terminal device and a buffer range outside the field of view. In a case of the first-person perspective, a size of the field of view of the game character corresponding to the terminal device matches a maximum rotation shooting range of the terminal device of the user. In a case of the third-person perspective, a size of the field of view of the game character corresponding to the terminal device matches a size of a display screen of the terminal device of the user. A size of the buffer range outside the field of view is determined based on a network latency of receiving the processed target video stream by the terminal device.

Specifically, a value of the buffer range is obtained by multiplying a value of a maximum moving speed at which the user controls the cloud game by a value of the network latency of the processed target video stream. In a case of the first-person perspective, the maximum moving speed at which the user controls the cloud game is an angular velocity at which a camera of the terminal device rotates when the user controls the terminal device. In a case of the third-person perspective, the maximum moving speed at which the user controls the cloud game is a speed at which the background image on the terminal device moves when the user controls the terminal device.

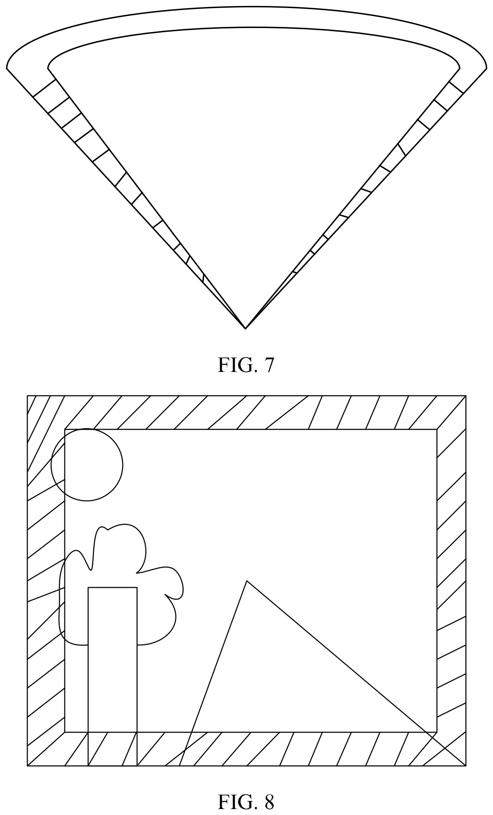

FIG. 7 is a diagram of a buffer range on a cloud game interface according to an embodiment of the present invention, virtual reality VR rendering is used as an example. A current average of network latencies is 0.15s, and a maximum rotation angular velocity at which the user controls the cloud game is 60°/s. To avoid a lagging feeling of the user on freezing of the cloud game caused by the network latency, the buffer range of the background image of the cloud game needs to be maintained. In this case, an angle value of the buffer range is 60°/s x 0.15s = 9°. In other words, a buffer angle of 9° is needed on each of a left side and a right side of an inner sector in the figure. A shadow part represents a size of a buffer angle, which is 9°.

FIG. 8 is a diagram of another buffer range on a cloud game interface according to an embodiment of the present invention. Plane rendering is used as an example. The size of the display screen of the terminal device of the user is 10 cm x 10 cm. A current average of network latencies is 0.1s, and the maximum moving speed at which the user controls the cloud game is 10 cm/s. To avoid a lagging feeling of the user on freezing of the cloud game caused by the network latency, the buffer range of the background image of the cloud game needs to be maintained. In this case, a length and a width of the buffer range are 10 cm/s x 0.1s = 1 cm. In other words, a size of an inner square in the figure is the size of the display screen: 10 cm x 10 cm, and a size of an outer square is the size of the display screen plus the size of the buffer range: 11 cm x 11 cm. In this case, a shadow part with oblique lines represents the size of the buffer range, which is 1 cm.

S103: After performing compression and encoding processing on the target video stream, the video stream processing module sends the processed target video stream to the terminal device.

The video stream processing module separately performs compression and encoding processing on the cropped video stream, and sends the processed target video stream to the terminal device by using a real-time communication technology: WebRTC (Web Real-Time Communications). Using the WebRTC technology can make transmission of the video stream more convenient and faster.

S104: The terminal device locally generates the game character and/or an item of the game character, and superimposes the game character and/or the item of the game character on a background image in the processed target video stream, to present, to the user, the game scene of the cloud game from a perspective of the game character.

The game character and/or the item of the game character locally generated by the terminal device matches a technology used by the rendering module to perform rendering on the background in the cloud game scene. Specifically, when the perspective type is the first-person perspective, the rendering module performs rendering on the background in the cloud game scene by using the virtual reality VR technology, to obtain the video stream of the background image of the cloud game. Correspondingly, the terminal device locally constructs a virtual reality VR rendering sphere, and performs rendering on the game character and/or the item of the game character inside the rendering sphere. When the perspective type is the third-person perspective, the rendering module performs rendering on the background in the cloud game scene by using the planar graphics rendering technology, to obtain the video stream of the background image of the cloud game. Correspondingly, the terminal device locally constructs a rendering plane, and performs rendering on the game character and/or the item of the game character in the rendering plane.

The terminal device uses a same type of rendering technology as the cloud game server, so that the background image in the cloud game scene and the game character and game item that are superimposed and displayed better match, thereby bringing better game visual experience to the user.

S105: A sending module sends coordinate information of the game character that is in the cloud game and that can be controlled by the user on the terminal device and spatial depth information of the cloud game to the terminal device.

Because the terminal device needs to perform display on the terminal device by superimposing the game character and/or the item of the game character that are/is locally generated by the terminal device on the background image of the cloud game that is rendered on the cloud game server, the sending module in the cloud game server needs to send the coordinate information of the game character that is in the cloud game and that can be controlled by the user on the terminal device to the terminal device. In addition, during superimposition, to make the background of the cloud game and the game character and/or the item of the game character more meet a relative position relationship between objects in real life, the sending module in the cloud game server further needs to send the spatial depth information of the cloud game to the terminal device.

S106: The terminal device performs display based on a spatial projection relationship by superimposing the background image in the processed target video stream on the spatial depth information of the cloud game, and controls the game character in the cloud game based on the coordinate information of the game character that is in the cloud game and that can be controlled by the user on the terminal device.

The terminal device performs display based on the spatial projection relationship by superimposing the background image in the processed target video stream on the spatial depth information of the cloud game, so that an image in the cloud game scene is more realistic. In addition, the game character in the cloud game is controlled based on the coordinate information of the game character that is in the cloud game and that can be controlled by the user on the terminal device.

Specifically, the terminal device receives an operation instruction of the user for moving leftward, and moves the background image in the game scene of the cloud game from the perspective of the game character leftward. The terminal device receives an operation instruction of the user for moving rightward, and moves the background image in the game scene of the cloud game from the perspective of the game character rightward. The terminal device receives an operation instruction of the user for moving forward, and zooms in the background image in the game scene of the cloud game from the perspective of the game character. The terminal device receives an operation instruction of the user for moving backward, and zooms out the background image in the game scene of the cloud game from the perspective of the game character.

It should be noted that a manner of presenting the cloud game on the terminal device may be downloading an application program related to the cloud game on the terminal device, or may be directly playing the cloud game on a web page, that is, a manner of tapping to play. A presentation manner of the cloud game on the terminal device is not limited in this embodiment of the present invention.

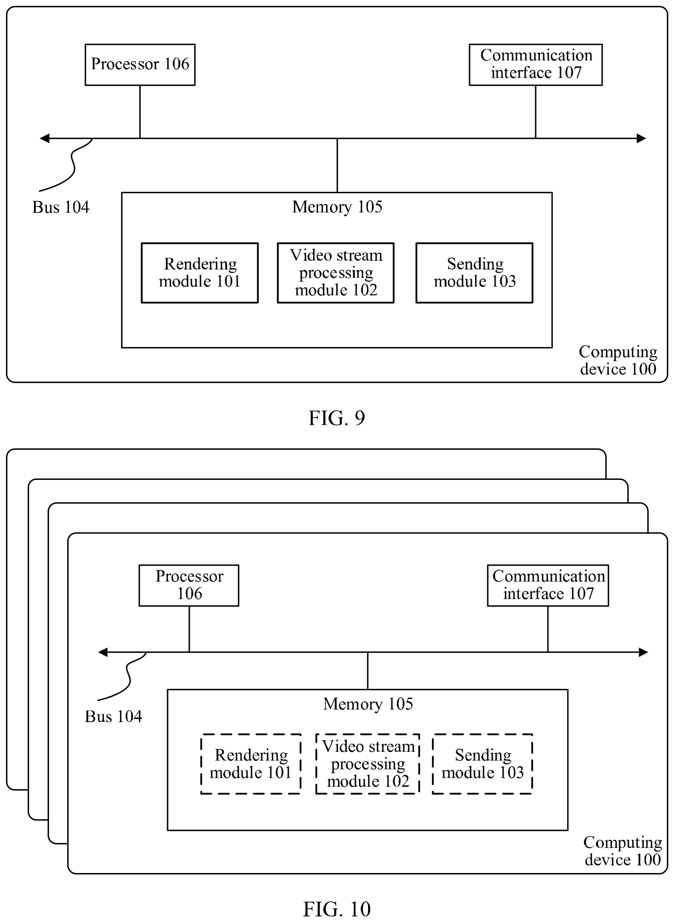

The present invention further provides a computing device. FIG. 9 is a diagram of a structure of a computing device for a cloud game processing method according to an embodiment of the present invention. The computing device 100 includes a bus 104, a processor 106, a memory 105, and a communication interface 107. The processor 106, the memory 105, and the communication interface 107 communicate with each other through the bus 104. The computing device 100 may be a server or a terminal device. It should be understood that quantities of processors and memories in the computing device 100 are not limited in this application.

The bus 104 may be a peripheral component interconnect (peripheral component interconnect, PCI) bus, an extended industry standard architecture (extended industry standard architecture, EISA) bus, or the like. Buses may be classified into an address bus, a data bus, a control bus, and the like. For ease of representation, only one line is used to represent the bus in FIG. 9, but it does not mean that there is only one bus or only one type of bus. The bus 104 may include a path for transmitting information between components (for example, the memory 105, the processor 106, and the communication interface 107) of the computing device 100.

The processor 106 may include any one or more of processors such as a central processing unit (central processing unit, CPU), a graphics processing unit (graphics processing unit, GPU), a microprocessor (microprocessor, MP), or a digital signal processor (digital signal processor, DSP).

The memory 105 may include a volatile memory (volatile memory), for example, a random access memory (random access memory, RAM). The processor 106 may further include a non-volatile memory (non-volatile memory), for example, a read-only memory (read-only memory, ROM), a flash memory, a hard disk drive (hard disk drive, HDD), or a solid-state drive (solid-state drive, SSD).

The memory 105 stores executable program code. The processor 106 executes the executable program code to separately implement functions of the rendering module 101, the video stream processing module 102, and the sending module 103, to implement a method for configuring a public cloud-based cloud connection service. In other words, the memory 105 stores instructions used by a cloud management platform to perform the method for configuring the public cloud-based cloud connection service.

The communication interface 107 uses a transceiver module, for example but not limited to, a network interface card or a transceiver, to implement communication between the computing device 100 and another device or a communication network.

An embodiment of the present invention further provides a computing device cluster. The computing device cluster includes at least one computing device. The computing device may be a server, for example, a central server, an edge server, or a local server in a local data center. In some embodiments, the computing device may alternatively be a terminal device like a desktop computer, a notebook computer, or a smartphone.

FIG. 10 is a diagram of a structure of a computing device cluster for a cloud game processing method according to an embodiment of the present invention. The computing device cluster includes at least one computing device 100. A memory 105 in one or more computing devices 100 in the computing device cluster may store same instructions used by a cloud management platform to perform a method for configuring a public cloud-based cloud connection service.

In some possible implementations, the one or more computing devices 100 in the computing device cluster may be configured to execute some instructions used by the cloud management platform to perform the method for configuring the public cloud-based cloud connection service. In other words, a combination of the one or more computing devices 100 may jointly execute the instructions used by the cloud management platform to perform the method for configuring the public cloud-based cloud connection service.

It should be noted that memories 105 in different computing devices 100 in the computing device cluster may store different instructions used to perform some functions of the cloud management platform. In other words, the instructions stored in the memories 105 in different computing devices 100 may be used to implement functions of one or more of the rendering module 101, the video stream processing module 102, and the sending module 103.

An embodiment of the present invention further provides a computer program product including instructions. The computer program product may be software or a program product that includes the instructions and that can run on a computing device or stored in any usable medium. When the computer program product runs on at least one computer device, the at least one computer device is enabled to perform the foregoing method that is for configuring the public cloud-based cloud connection service and that is applied to the cloud management platform.

An embodiment of the present invention further provides a computer-readable storage medium. The computer-readable storage medium may be any usable medium that can be stored by a computing device, or a data storage device like a data center including one or more usable media. The usable medium may be a magnetic medium (for example, a floppy disk, a hard disk, or a magnetic tape), an optical medium (for example, a DVD), a semiconductor medium (for example, a solid-state drive), or the like. The computer-readable storage medium includes instructions. The instructions instruct the computing device to perform the foregoing method that is for configuring the public cloud-based cloud connection service and that is applied to the cloud management platform.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some technical features thereof, without departing from the protection scope of the technical solutions of embodiments of the present invention.

## Claims

1. A cloud game processing method, wherein the method is applied to a cloud game server, the cloud game server comprises a rendering module and a video stream processing module, a user can control, on a terminal device, a game character in a cloud game, and the method comprises:
performing, by the rendering module, rendering on a background in a cloud game scene to obtain a video stream of a background image of the cloud game;
cropping, by the video stream processing module, an image in the video stream of the background image of the cloud game to obtain a target video stream of the cloud game, wherein a size of a game background image in the target video stream matches a field of view of the game character corresponding to the terminal device; and
after performing compression and encoding processing on the target video stream, sending, by the video stream processing module, the processed target video stream to the terminal device, wherein the terminal device is configured to locally generate the game character and/or an item of the game character, and superimpose the game character and/or the item of the game character on the background image in the processed target video stream, to present, to the user, the game scene of the cloud game from a perspective of the game character.

2. The method according to claim 1, wherein the size of the game background image in the target video stream comprises the field of view of the game character corresponding to the terminal device and a buffer range outside the field of view, and a size of the buffer range is determined based on a network latency of receiving the processed target video stream by the terminal device.

3. The method according to claim 2, wherein a value of the buffer range is obtained by multiplying a value of a maximum moving speed at which the user controls the cloud game by a value of the network latency of the processed target video stream.

4. The method according to any one of claims 1 to 3, wherein the cloud game server further comprises a sending module, and the method further comprises:
sending, by the sending module, coordinate information of the game character that is in the cloud game and that can be controlled by the user on the terminal device and spatial depth information of the cloud game to the terminal device, wherein the terminal device is configured to perform display based on a spatial projection relationship by superimposing the background image in the processed target video stream on the spatial depth information of the cloud game, and the terminal device is further configured to control the game character in the cloud game based on the coordinate information of the game character that is in the cloud game and that can be controlled by the user on the terminal device.

5. The method according to any one of claims 1 to 4, wherein performing, by the rendering module, rendering on the background in the cloud game scene to obtain the video stream of the background image of the cloud game comprises:
identifying a perspective type in the cloud game scene, and when the perspective type is a first-person perspective, performing rendering on the background in the cloud game scene by using a virtual reality VR technology, to obtain the video stream of the background image of the cloud game.

6. The method according to any one of claims 1 to 4, wherein performing, by the rendering module, rendering on the background in the cloud game scene to obtain the video stream of the background image of the cloud game comprises:
identifying a perspective type in the cloud game scene, and when the perspective type is a third-person perspective, performing rendering on the background in the cloud game scene by using a planar graphics rendering technology, to obtain the video stream of the background image of the cloud game.

7. A cloud game processing method, wherein the method is applied to a cloud game system, a user can control, on a terminal device, a game character in a cloud game, and the method comprises:
performing, by a cloud game server, rendering on a background in a cloud game scene to obtain a video stream of a background image of the cloud game;
cropping, by the cloud game server, an image in the video stream of the background image of the cloud game to obtain a target video stream of the cloud game, wherein a size of a game background image in the target video stream matches a field of view of the game character corresponding to the terminal device;
after performing compression and encoding processing on the target video stream, sending, by the cloud game server, the processed target video stream to the terminal device; and
locally generating, by the terminal device, the game character and/or an item of the game character, and superimposing the game character and/or the item of the game character on the background image in the processed target video stream, to present, to the user, the game scene of the cloud game from a perspective of the game character.

8. The method according to claim 7, wherein the size of the game background image in the target video stream comprises the field of view of the game character corresponding to the terminal device and a buffer range outside the field of view, and a size of the buffer range is determined based on a network latency of receiving the processed target video stream by the terminal device.

9. The method according to claim 8, wherein a value of the buffer range is obtained by multiplying a value of a maximum moving speed at which the user controls the cloud game by a value of the network latency of the processed target video stream.

10. The method according to any one of claims 7 to 9, wherein the method further comprises:
sending, by the cloud game server, coordinate information of the game character that is in the cloud game and that can be controlled by the user on the terminal device and spatial depth information of the cloud game to the terminal device;
superimposing, by the terminal device, the background image in the processed target video stream on the spatial depth information of the cloud game based on a spatial projection relationship and performing display; and
further controlling, by the terminal device, the game character in the cloud game based on the coordinate information of the game character that is in the cloud game and that can be controlled by the user on the terminal device.

11. The method according to any one of claims 7 to 10, wherein performing, by the cloud game server, rendering on the background in the cloud game scene to obtain the video stream of the background image of the cloud game comprises:
identifying a perspective type in the cloud game scene, and when the perspective type is a first-person perspective, performing rendering on the background in the cloud game scene by using a virtual reality VR technology, to obtain the video stream of the background image of the cloud game.

12. The method according to claim 11, wherein locally generating, by the terminal device, the game character and/or the item of the game character comprises:
locally constructing, by the terminal device, a virtual reality VR rendering sphere, and performing rendering on the game character and/or the item of the game character inside the rendering sphere.

13. The method according to any one of claims 7 to 10, wherein performing, by the cloud game server, rendering on the background in the cloud game scene to obtain the video stream of the background image of the cloud game comprises:
identifying a perspective type in the cloud game scene, and when the perspective type is a third-person perspective, performing rendering on the background in the cloud game scene by using a planar graphics rendering technology, to obtain the video stream of the background image of the cloud game.

14. The method according to claim 13, wherein locally generating, by the terminal device, the game character and/or the item of the game character comprises:
locally constructing, by the terminal device, a rendering plane, and performing rendering on the game character and/or the item of the game character in the rendering plane.

15. The method according to any one of claims 7 to 14, wherein the method further comprises:
receiving, by the terminal device, an operation instruction of the user for moving leftward, and moving the background image in the game scene of the cloud game from the perspective of the game character leftward; and
receiving, by the terminal device, an operation instruction of the user for moving rightward, and moving the background image in the game scene of the cloud game from the perspective of the game character rightward.

16. The method according to any one of claims 7 to 15, wherein the method further comprises:
receiving, by the terminal device, an operation instruction of the user for moving forward, and zooming in the background image in the game scene of the cloud game from the perspective of the game character; and
receiving, by the terminal device, an operation instruction of the user for moving backward, and zooming out the background image in the game scene of the cloud game from the perspective of the game character.

17. A cloud game server, wherein the cloud game server comprises:
a rendering module, configured to perform rendering on a background in a cloud game scene to obtain a video stream of a background image of a cloud game; and
a video stream processing module, configured to crop an image in the video stream of the background image of the cloud game to obtain a target video stream of the cloud game, wherein a size of a game background image in the target video stream matches a field of view of a game character corresponding to a terminal device, wherein
the video stream processing module is further configured to: after performing compression and encoding processing on the target video stream, send the processed target video stream to the terminal device, wherein the terminal device is configured to locally generate the game character and/or an item of the game character, and superimpose the game character and/or the item of the game character on the background image in the processed target video stream, to present, to a user, the game scene of the cloud game from a perspective of the game character.

18. The cloud game server according to claim 17, wherein the size of the game background image in the target video stream comprises the field of view of the game character corresponding to the terminal device and a buffer range outside the field of view, and a size of the buffer range is determined based on a network latency of receiving the processed target video stream by the terminal device.

19. The cloud game server according to claim 18, wherein a value of the buffer range is obtained by multiplying a value of a maximum moving speed at which the user controls the cloud game by a value of the network latency of the processed target video stream.

20. The cloud game server according to any one of claims 17 to 19, wherein the cloud game server further comprises:
a sending module, configured to send coordinate information of the game character that is in the cloud game and that can be controlled by the user on the terminal device and spatial depth information of the cloud game to the terminal device, wherein the terminal device is configured to perform display based on a spatial projection relationship by superimposing the background image in the processed target video stream on the spatial depth information of the cloud game, and the terminal device is further configured to control the game character in the cloud game based on the coordinate information of the game character that is in the cloud game and that can be controlled by the user on the terminal device.

21. The cloud game server according to any one of claims 17 to 20, wherein the rendering module is specifically configured to: identify a perspective type in the cloud game scene; and when the perspective type is a first-person perspective, perform rendering on the background in the cloud game scene by using a virtual reality VR technology, to obtain the video stream of the background image of the cloud game.

22. The cloud game server according to any one of claims 17 to 20, wherein the rendering module is specifically configured to: identify a perspective type in the cloud game scene; and when the perspective type is a third-person perspective, perform rendering on the background in the cloud game scene by using a planar graphics rendering technology, to obtain the video stream of the background image of the cloud game.

23. A cloud game system, wherein the cloud game system comprises:
a cloud game server, configured to perform rendering on a background in a cloud game scene to obtain a video stream of a background image of a cloud game, wherein
the cloud game server is further configured to crop an image in the video stream of the background image of the cloud game to obtain a target video stream of the cloud game, wherein a size of a game background image in the target video stream matches a field of view of a game character corresponding to a terminal device; and
the cloud game server is further configured to: after performing compression and encoding processing on the target video stream, send the processed target video stream to the terminal device; and
the terminal device, configured to locally generate the game character and/or an item of the game character, and superimpose the game character and/or the item of the game character on the background image in the processed target video stream, to present, to a user, the game scene of the cloud game from a perspective of the game character.

24. The cloud game system according to claim 23, wherein the size of the game background image in the target video stream comprises the field of view of the game character corresponding to the terminal device and a buffer range outside the field of view, and a size of the buffer range is determined based on a network latency of receiving the processed target video stream by the terminal device.

25. The cloud game system according to claim 24, wherein a value of the buffer range is obtained by multiplying a value of a maximum moving speed at which the user controls the cloud game by a value of the network latency of the processed target video stream.

26. A computing device cluster, comprising at least one computing device, wherein each computing device comprises a processor and a memory; and
the processor of the at least one computing device is configured to execute instructions stored in the memory of the at least one computing device, to enable the computing device cluster to perform the method according to any one of claims 1 to 6.

27. A computer program product comprising instructions, wherein when the instructions are run by a computer device cluster, the computer device cluster is enabled to perform the method according to any one of claims 1 to 6.

28. A computer-readable storage medium, comprising computer program instructions, wherein when the computer program instructions are executed by a computing device cluster, the computing device cluster performs the method according to any one of claims 1 to 6.
